# FASCICULE DE BREVET EUROPEEN

(11) **EP 3 607 211 B1**
(45) Date de publication et mention de la délivrance du brevet: **02.06.2021**
(21) Numéro de dépôt: 18724944.6
(22) Date de dépôt: 09.04.2018
(51) Int. Cl.: F04D 29/44, F01D 5/04, F01D 5/14, F01D 9/02, F01D 9/04

(54) **DIFFUSEUR AXIAL RENFORCÉ**
VERSTÄRKTER AXIALDIFFUSOR
REINFORCED AXIAL DIFFUSER

(30) Priorité: 07.04.2017 FR 1753055
(43) Date de publication de la demande: 12.02.2020
(73) Titulaire: Safran Aircraft Engines, 75015 Paris (FR)
(72) Inventeur: COMBIER, Florent, 77550 Moissy-Cramayel (FR); BELOUAR, Jean-Claude, 77550 Moissy-Cramayel (FR); FRECHE, Pauline Anne, 77550 Moissy-Cramayel (FR); GUINOISEAU, Eric Jean-Paul, 77550 Moissy-Cramayel (FR); LAURENT, Cédric Louis Joseph, 77550 Moissy-Cramayel (FR)
(74) Mandataire: Regimbeau
(86) Numéro de dépôt international: PCT/FR2018/050891
(87) Numéro de publication internationale: WO 2018/185445

(56) Documents cités:
- EP-A1- 2 650 546
- US-A1- 2005 220 616
- US-A1- 2017 097 010

## Description

### DOMAINE DE L'INVENTION

L'invention concerne de manière générale les moteurs à turbine à gaz, et plus particulièrement un étage de diffusion axial d'un compresseur radial ou mixte d'une turbine à gaz.

### ARRIERE-PLAN TECHNOLOGIQUE

Un compresseur comprend un ou plusieurs disques tournants (rotor ou rouet), aubagés ou non et une ou plusieurs roues à aubes fixes (étages redresseurs).

Un compresseur radial (ou centrifuge) possède au moins un étage de compression radial, c'est-à-dire apte à réaliser un écoulement de gaz perpendiculaire à l'axe central du compresseur. Il comprend au moins un rouet à pales radiales qui aspirent l'air axialement, qui, sous l'effet de la force radiale, est accéléré, comprimé et refoulé radialement. Cet air est ensuite redressé dans un diffuseur (aubage fixe) qui transforme une partie de sa vitesse en pression statique en ralentissant les gaz en sortie du rouet.

Les gaz sont alors guidés vers la chambre de combustion.

Un compresseur mixte (ou hélico-radial) possède au moins un étage de compression incliné par rapport à l'axe central, de sorte que le fluide sort du rouet du compresseur en faisant un angle non nul avec la direction radiale.

Un diffuseur d'un compresseur radial est composé d'une roue formée de deux flasques entre lesquelles s'écoulent les gaz de manière radiale ou inclinée à partir du centre vers la périphérie. Généralement, le diffuseur comprend, d'amont en aval dans le sens d'écoulement des gaz dans le compresseur, une partie radiale et une partie axiale 5. Des ailettes 10' sont réparties entre les flasques tout le long de la roue, dans la partie radiale et dans la partie axiale du diffuseur. Ces ailettes 10' forment une grille d'écoulement entre les bords d'attaque de ces ailettes 10' et leur bord de fuite.

La partie axiale 5 du diffuseur est généralement formée par brasure de trois ensembles : une virole externe, une virole interne et les ailettes. La virole externe et la virole interne forment la partie aval (et axiale) des flasques du diffuseur.

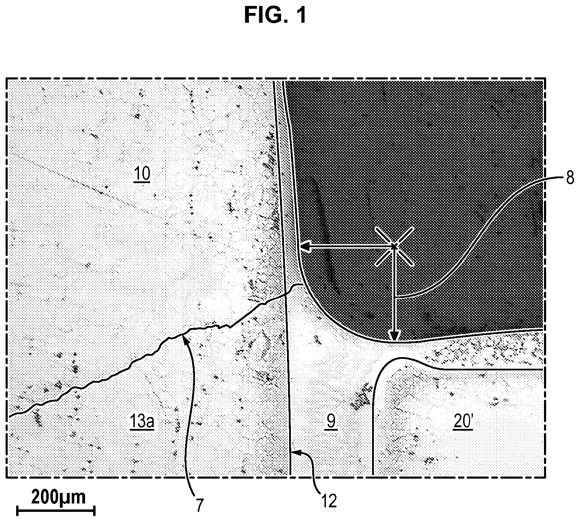

Toutefois, il a été observé qu'en fonctionnement des criques circonférentielles 7 pouvaient se former au niveau du bord de fuite des ailettes 10' après un certain nombre de cycles. Ces criques 7 partent alors du rayon de brasure 8 s'étendant entre l'ailette 10' et l'une des viroles 20' (la virole interne sur la figure 1) puis se propagent circonférentiellement dans l'ailette et dans les viroles 20'. Ces criques 7 apparaissent en raison des fortes sollicitations vibratoires que subit le diffuseur et sont amplifiées par le très faible rayon de brasure 8, qui induit une sur-contrainte locale. Toutefois, la géométrie du rayon de brasure 8 est difficilement maîtrisable industriellement dans la mesure où elle dépend d'une opération manuelle (dépôt de la pâte à braser 9) et présente donc de fortes dispersions en production.

Par rayon de brasure 8, on comprend ici le congé formé par la pâte à braser 9 déposée entre l'ailette 10' et la fente formée dans la virole 20' après que la pâte 9 a coulé par capillarité, sous l'effet de la chaleur. Un tel rayon de brasure 8 est par exemple illustré en figure 1.

Le document US2017/097010 A1 divulgue un diffuseur selon le préambule de la revendication 1.

Le document US 2005/220616 décrit un redresseur comprenant une série d'ailettes dont le bord de fuite est courbe.

### RESUME DE L'INVENTION

Un objectif de l'invention est donc de proposer une solution permettant de limiter les risques d'endommagement d'un diffuseur axial pour un compresseur radial ou mixte et qui permette en particulier de rendre le diffuseur plus tolérant aux sollicitations vibratoires et aux dispersions de valeurs du rayon de brasure.

Pour cela, l'invention propose un diffuseur d'un compresseur radial ou mixte selon la revendication 1.

Certaines caractéristiques préférées mais non limitatives du diffuseur décrit ci-dessus sont les suivantes :
- la distance entre le bord d'attaque et le bord de fuite de l'ailette à mi-hauteur de l'ailette est plus courte de 10% à 15% que la distance entre le bord d'attaque et le bord de fuite de l'ailette au niveau de la virole interne,
- le bord de fuite présente un rayon de courbure plus petit à proximité de la virole interne et de la virole externe qu'un rayon de courbure à mi-hauteur de l'ailette,
- le rayon de courbure du bord de fuite à proximité de la virole interne et de la virole externe est au moins deux fois plus petit que le rayon de courbure du bord de fuite à mi-hauteur de l'ailette,
- le bord de fuite présente une section évolutive comprenant une première partie formant un muret à proximité de la virole externe et présentant une hauteur sensiblement constante et égale à au plus 10% de la hauteur de l'ailette, une deuxième partie courbe et une troisième partie formant un muret sensiblement identique à la première partie,
- la virole interne et la virole externe présentent chacune : une face interne s'étendant en regard de l'ailette, une face externe opposée à la face interne, et un bord amont et un bord aval, l'amont et l'aval étant définis par le sens d'écoulement des gaz dans le diffuseur, la face externe de la virole externe et de la virole interne présentant chacune une surépaisseur au niveau de chaque ailette, ladite surépaisseur s'étendant au moins entre le bord aval de la virole associée et une projection du bord de fuite de l'ailette sur ladite face externe,
- la surépaisseur la virole interne et/ou de la virole externe s'étend en outre de part et d'autre de la fente associée logeant l'ailette,
- la surépaisseur s'étend sur au plus un tiers d'une longueur de la fente associée de la virole interne et/ou de la virole externe, ladite longueur correspondant sensiblement à la distance entre le bord d'attaque et le bord de fuite de l'ailette au niveau de la virole interne,
- la surépaisseur s'étend à une distance de l'ordre de 2 mm de la fente de la virole associée, et/ou
- la surépaisseur (28, 38) présente une forme en V ou en Y.

L'invention propose également un compresseur radial ou mixte comprenant un tel diffuseur ainsi qu'un moteur comprenant ce compresseur radial ou mixte.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 illustre une vue en coupe partielle du bord de fuite d'une ailette fixée par brasage au niveau de son pied dans la fente d'une virole interne d'un distributeur conventionnel, sur laquelle est visible un exemple de crique initiée au niveau du rayon de brasage et se propageant dans l'ailette.
La figure 2 illustre une vue en coupe partielle d'un exemple de réalisation d'une ailette et des viroles associées d'un diffuseur axial selon l'invention, sur laquelle ont été représentées en pointillés une ailette et les viroles associées d'un diffuseur axial conforme à l'art antérieur.
La figure 3 est une vue de côté et plus en détail de l'exemple de réalisation de la figure 2.
Les figures 4a et 4b sont des vues en perspective d'une virole externe et d'une virole interne, respectivement, d'un diffuseur axial, sur laquelle sont visibles des exemples de réalisation de surépaisseurs conformes à l'invention.
La figure 5 est une vue en coupe partielle et schématique d'une virole (externe ou interne) d'un diffuseur axial sur laquelle sont représentés plusieurs exemples de réalisation de murets dont la hauteur est constante ou évolutive.

### DESCRIPTION DETAILLEE D'UN MODE DE REALISATION

Un diffuseur axial 5 selon la présente invention est notamment destiné à être utilisé avec un compresseur de type radial ou mixte.

Dans le cas d'un compresseur radial, un flux gazeux est d'abord aspiré dans une manche d'entrée d'air puis comprimé entre les pales d'un rouet du compresseur radial et son carter. Le compresseur est de symétrie axiale autour d'un axe. Le flux gazeux comprimé sort alors radialement du rouet. Si le compresseur était mixte, le flux gazeux sortirait incliné selon un angle non nul par rapport à une direction radiale à l'axe.

L'air comprimé sort radialement du rouet tout en présentant un moment cinétique et passe dans un diffuseur 5 du compresseur. Le rôle du diffuseur 5 est de convertir une partie de l'énergie cinétique des gaz en provenance du compresseur en pression statique en ralentissant la vitesse des gaz et de redresser l'écoulement issu du rouet. Il comprend pour cela notamment une partie axiale et une pluralité d'ailettes 10 disposées selon sa circonférence, qui s'étendent entre une virole interne 20 et une virole externe 30.

Chacune des ailettes 10 présente, de manière connue, un bord d'attaque 11 disposé en regard d'un écoulement de gaz dans le diffuseur 5, un bord de fuite 12 opposé au bord d'attaque 11, un pied 13a fixé par brasage dans une fente 21 de la virole interne 20, une tête 13b fixée par brasage dans une fente 31 de la virole externe 30 et une hauteur h correspondant à une dimension minimale de l'ailette 10 suivant une direction radiale par rapport à l'axe du diffuseur, entre la virole interne 20 et la virole externe 30 au niveau de l'ailette 10. Généralement, la hauteur *h* correspond à la hauteur du bord d'attaque 11 de l'ailette 10.

Afin de réduire les risques de formation de criques, le bord de fuite 12 de chaque ailette 10 est courbe de sorte qu'une distance *d₁* entre le bord d'attaque 11 et le bord de fuite 12 de l'ailette 10 à mi-hauteur *h*/*2* de l'ailette 10 est plus courte de 5% à 15% qu'une distance *d₂* entre le bord d'attaque 11 et le bord de fuite 12 de l'ailette 10 au niveau de la virole interne 20 (cette dernière distance *d₂* étant souvent désignée dans la littérature par le terme de « corde »).

Le bord de fuite 12 présente donc une forme courbe à la manière d'une lunule ou d'une demi-lune. Cette forme courbe peut être réalisée soit par enlèvement de matière en usinant par exemple une ailette 10 de diffuseur 5 conventionnelle, soit directement par fonderie lors de la fabrication de l'ailette 10.

De préférence, la distance *d₁* entre le bord d'attaque 11 et le bord de fuite 12 de l'ailette 10 à mi-hauteur *h*/*2* de l'ailette 10 est plus courte de 10% à 15% que la corde.

Cette géométrie permet ainsi de décharger le rayon de brasure 8 au niveau du bord de fuite 12 des ailettes 10 en modifiant le chemin d'effort et en assouplissant fortement le bord de fuite 12. La Demanderesse s'est aperçue du fait que la zone critique susceptible d'être endommagée en raison des fortes sollicitations vibratoires restait au niveau du rayon de brasure 8 mais que la géométrie spécifique du bord de fuite 12 (courbe sur au moins une partie de sa hauteur *h*) permettait de décaler cette zone critique vers l'amont, dans une zone où l'ailette 10 est plus épaisse et où le rayon de brasure 8 est plus grand. Cela permet en outre de réduire globalement les contraintes statiques et dynamiques du diffuseur 5.

On notera que l'impact de la modification de la longueur de l'ailette 10 (c'est-à-dire la distance *d₁* entre le bord d'attaque 11 et le bord de fuite 12) à mi-hauteur *h*/*2* de l'ailette 10 est acceptable d'un point de vue aérodynamique, c'est-à-dire que l'ailette 10 reste capable de redresser suffisamment l'écoulement et de ralentir la vitesse des gaz en sortie du rouet du compresseur.

Dans une forme de réalisation, le bord de fuite 12 des ailettes 10 présente un rayon de courbure R1 plus petit à proximité de la virole interne 20 et de la virole externe 30 qu'à mi-hauteur *h*/*2* de l'ailette 10. Par exemple, le rayon de courbure R1 à proximité de la virole interne 20 et de la virole externe 30 est au moins deux fois plus petit, par exemple quatre fois plus petit, que le rayon de courbure R2 à mi-hauteur *h*/*2* de l'ailette 10.

Cela permet ainsi de maintenir une distance minimale à mi-hauteur *h*/*2* de l'ailette 10 entre son bord d'attaque 11 et son bord de fuite 12 (et donc l'impact aérodynamique sur l'ailette 10) tout en déchargeant suffisamment le rayon de brasure 8. On comprendra en effet que lorsque le rayon de courbure de la partie courbe du bord de fuite 12 est constant sur toute la hauteur *h* de l'ailette 10, la distance *d₁* à mi-hauteur *h*/*2* entre le bord d'attaque 11 et le bord de fuite 12 est nécessairement plus courte que lorsque le rayon de courbure est plus grand sur au moins une partie de la hauteur *h* de l'ailette 10.

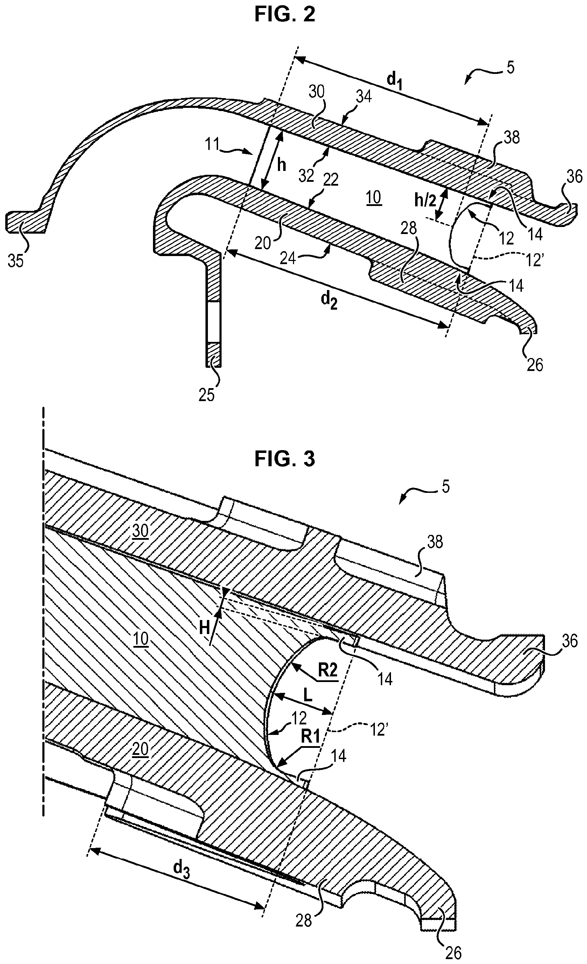

Par exemple, pour une ailette 10 présentant une hauteur *h* de l'ordre de dix millimètres et une corde *d₂* d'une trentaine de millimètres, le rayon de courbure R1 de la partie courbe du bord de fuite 12 peut être de l'ordre de 1.5 mm à proximité de la virole interne 20 et de la virole externe 30 et puis augmenter jusqu'à un rayon de courbure R2 de l'ordre de 6 mm, de sorte que la distance *d₁* est plus courte de 3.8 mm que la corde *d₂* de cette l'ailette 10. Ainsi, à mi-hauteur *h*/*2* de l'ailette 10, le bord de fuite 12 d'une ailette 10 d'un diffuseur 5 conforme à l'invention s'étend à environ 3.8 mm du bord de fuite 12' d'une ailette 10' conventionnelle (qui est donc dépourvue de partie courbe et est représentée en pointillés sur les figures 2 et 3).

Dans une forme de réalisation, la transition entre le petit rayon de courbure R1 et le grand rayon de courbure R2 de la partie courbe du bord de fuite 12 est progressive.

Comme visible sur les figures 2 et 3, le bord de fuite 12 peut n'être courbe que sur une partie seulement de la hauteur *h* de l'ailette 10. Par exemple, le bord de fuite 12 peut présenter une section évolutive comprenant une première partie formant un muret 14 à proximité de la virole externe 30 et présentant une hauteur *H* sensiblement constante, une deuxième partie correspondant à la partie courbe et une troisième partie formant un muret 14 à proximité de la virole interne 20 sensiblement identique à la première partie.

La hauteur *H* des murets 14 est sensiblement constante entre l'extrémité aval du bord de fuite 12 et le début de la deuxième partie (la partie courbe). Par exemple, la hauteur *H* des murets 14 peut être sensiblement constante sur une longueur axiale d'environ 1.5 mm.

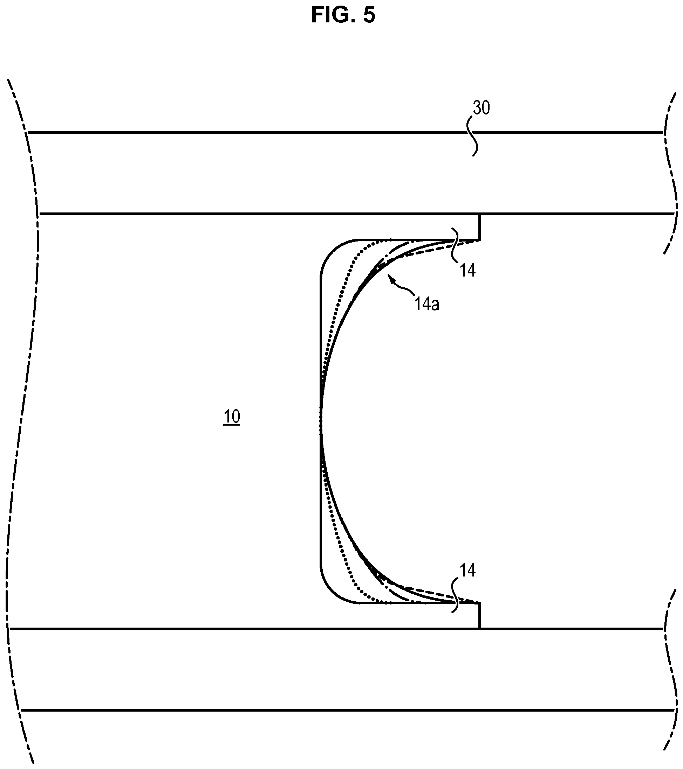

En variante (voir Figure 5), la hauteur *H* des murets 14 est évolutive. Par exemple, comme illustré sr la Figure 5, la hauteur H peut être comprise entre 0.6 mm au niveau de l'extrémité aval du bord de fuite 12 et environ 1 mm au début de la deuxième partie (voir la courbe indiquée par la référence 14a).

La hauteur *H* de chaque muret 14 est au plus égale à 10% de la hauteur *h* de l'ailette 10. Ainsi, dans l'exemple donné ci-dessus, la hauteur *H* de chaque muret 14 est inférieure à un millimètre, par exemple de l'ordre de 0.6 mm.

Le bord de fuite 12 reste donc courbe sur une partie substantielle de la hauteur *h* de l'ailette 10, ici sur au moins 90% de sa hauteur *h.*

Dans ce mode de réalisation, la partie courbe du bord de fuite 12 part donc des murets 14 et non de la virole interne 20 et de la virole externe 30.

La formation de murets 14 au niveau du bord de fuite 12 permet d'obtenir un congé de brasure continu entre les ailettes 10 et les viroles 20, 30 tout le long de l'ailette 10, jusqu'au bord de fuite 12. Il n'y a en effet pas de discontinuité susceptible d'être néfaste pour la tenue mécanique ou l'aérodynamique. Les murets 14 facilitent en outre la fabrication du diffuseur 5 et notamment l'assemblage des ailettes 10 avec les viroles 20, 30 avant leur brasage. Les murets 14 autorisent en effet une tolérance de calage radial des ailettes 10 dans les fentes 21, 31 qui est plus importante que lorsque le bord de fuite 12 est courbe sur toute la hauteur *h* des ailettes 10 et est dépourvu de murets 14. En effet, même dans le cas d'un positionnement radial au maximum de la tolérance, le muret 14 ne sera pas en retrait par rapport à la veine (il sera toujours débouchant dans la veine) et ne créera donc pas de discontinuité dans la veine (ressaut négatif).

La virole interne 20 et la virole externe 30 présentent chacune une face interne 22, 32, s'étendant en regard de l'ailette 10, et une face externe 24, 34 opposée à la face interne 22, 32. Les faces internes 22, 32 de la virole interne 20 et de la virole externe 30 se font donc face et délimitent ensemble la veine d'écoulement du gaz dans le diffuseur 5.

La virole interne 20 et la virole externe 30 comprennent en outre chacune un bord amont 25, 35 et un bord aval 26, 36, l'amont et l'aval étant définis par le sens d'écoulement des gaz dans le diffuseur 5.

De manière optionnelle, afin de réduire encore les contraintes statiques et dynamiques au niveau du rayon de brasure 8 et d'améliorer le positionnement fréquentiel des modes propres du diffuseur 5, la face externe 24, 34 de la virole interne 20 et de la virole externe 30 peuvent chacune présenter, au niveau de chaque ailette 10, une surépaisseur 28, 38. Cette surépaisseur 28, 38 s'étend alors au moins entre une projection du bord de fuite 12 de l'ailette 10 sur ladite face externe 24, 34 et le bord aval 26, 36 de la virole 20, 30 associée. Le cas échéant, la surépaisseur 28, 38 peut s'étendre au-delà de la projection du bord de fuite 12.

La surépaisseur 28, 38 peut s'étendre jusqu'au bord aval 26, 36 de la virole associée 20, 30, auquel cas ladite surépaisseur 28, 38 peut être en partie réalisée dans la bride de montage utilisée habituellement pour l'usinage de la virole 20, 30. En variante, la surépaisseur 28, 38 peut s'arrêter à proximité de la bride de montage sans l'englober.

La surépaisseur 28, 38 est hors veine et ne gêne donc pas l'écoulement des gaz dans le diffuseur 5.

Dans une forme de réalisation, la surépaisseur 28, 38 peut en outre être prolongée de manière à s'étendre de part et d'autre des fentes 21, 31 logeant les ailettes 10. Par exemple, la surépaisseur 28, 38 peut s'étendre le long de chaque fente 21, 31 sur une distance d₃ au plus égale à un tiers de la corde *d₂* de l'ailette 10.

La surépaisseur 28, 38 peut présenter une épaisseur (correspondant à la dimension suivant la direction radiale par rapport à l'axe de révolution du diffuseur 5) comprise entre 0.5 et 2mm, soit entre 10% et 100% de l'épaisseur initial de la virole 20, 30

Afin de permettre le dépôt de la pâte 9 à braser en vue de fixer l'ailette 10 dans la fente 21, 31 tout en réduisant les contraintes dynamiques et statiques du diffuseur 5, la surépaisseur 28, 38 s'étend à une distance de l'ordre de deux millimètres du bord de chaque fente 21, 31.

La surépaisseur 28, 38 peut par exemple présenter une forme en V ou en Y.

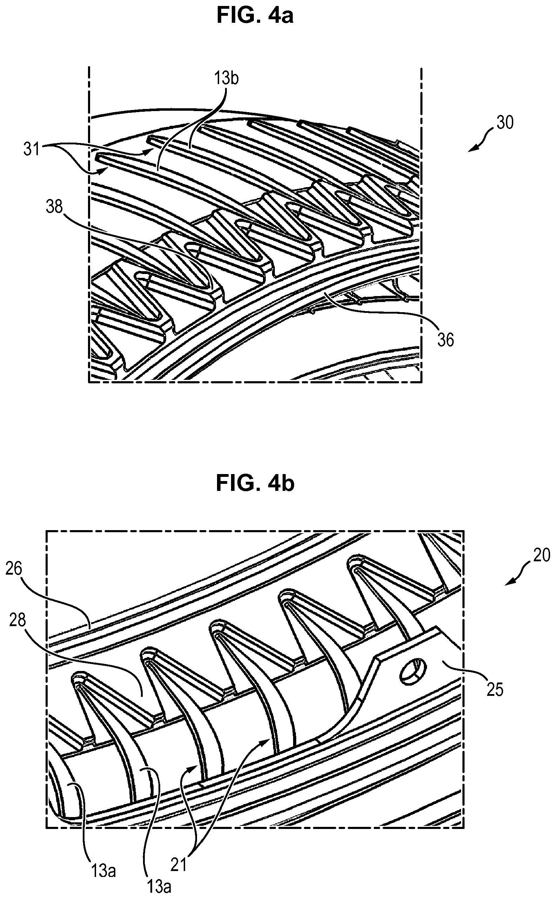

Des exemples de surépaisseur 28, 38s ont par exemple été illustrés sur les figures 4a et 4b annexées.

Comme on peut le voir sur la figure 4a annexée, la surépaisseur 38 de la virole externe 30 peut avoir la forme de créneaux en V. Ces créneaux peuvent notamment être réalisés par usinage de la virole externe 30 depuis le bord aval 36 d'une part, afin de former les arêtes aval en forme V, puis depuis le bord amont 35 afin de former des arêtes amont en forme de V.

La virole interne 20 peut présenter une surépaisseur 28 de forme et de dimensions identiques à celle de la virole externe 30. Toutefois, pour des questions de faisabilité et en particulier d'accès au bord amont 25, il est possible de ne réaliser que les arêtes aval, la matière en amont pouvant être laissée (voir figure 4b).

## Revendications

1. Diffuseur (5) d'un compresseur radial ou mixte comprenant une virole interne (20), une virole externe (30) et une série d'ailettes (10) s'étendant radialement par rapport à un axe de révolution du diffuseur (5) entre la virole interne (20) et la virole externe (30),
chaque ailette (10) présentant un bord d'attaque (11), un bord de fuite (12) opposé au bord d'attaque (11), et une hauteur (*h*) correspondant à une dimension minimale de l'ailette (10), suivant une direction radiale par rapport à l'axe du diffuseur (5), entre la virole interne (20) et la virole externe (30) au niveau de l'ailette (10),
le diffuseur étant **caractérisé en ce que**:
le bord de fuite (12) de chaque ailette (10) est courbe de sorte qu'une distance (*d₁*) entre le bord d'attaque (11) et le bord de fuite (12) de l'ailette (10) sensiblement à mi-hauteur (*h*/*2*) de l'ailette (10) est plus courte de 5% à 15% qu'une distance (*d₂*) entre le bord d'attaque (11) et le bord de fuite (12) de l'ailette (10) au niveau de la virole interne (20) et
le bord de fuite (12) présente une section évolutive comprenant une première partie formant un muret (14) à proximité de la virole externe (20) et présentant une hauteur (*H*) égale à au plus 10% de la hauteur (*h*) de l'ailette (10), une deuxième partie courbe et une troisième partie formant un muret (14) sensiblement identique à la première partie.

2. Diffuseur (5) selon la revendication 1, dans lequel la distance (*d₁*) entre le bord d'attaque (11) et le bord de fuite (12) de l'ailette (10) à mi-hauteur (*h*/*2*) de l'ailette (10) est plus courte de 10% à 15% que la distance (*d₂*) entre le bord d'attaque (11) et le bord de fuite (12) de l'ailette (10) au niveau de la virole interne (20).

3. Diffuseur (5) selon l'une des revendications 1 ou 2, dans lequel le bord de fuite (12) présente un rayon de courbure (R1) plus petit à proximité de la virole interne (20) et de la virole externe (30) qu'un rayon de courbure (R2) à mi-hauteur (*h*/*2*) de l'ailette (10).

4. Diffuseur (5) selon la revendication 3, dans lequel le rayon de courbure (R1) du bord de fuite (12) à proximité de la virole interne (20) et de la virole externe (30) est au moins deux fois plus petit que le rayon de courbure (R2) du bord de fuite (12) à mi-hauteur (h/2) de l'ailette (10).

5. Diffuseur (5) selon l'une des revendications 1 à 4, dans lequel le la hauteur (H) du muret (14) dans la première partie est sensiblement constante.

6. Diffuseur (5) selon l'une des revendications 1 à 4, dans lequel le la hauteur (H) du muret (14) dans la première partie est évolutive.

7. Diffuseur (5) selon la revendication 6, dans lequel la hauteur (H) du muret est comprise entre 0.6 mm au niveau d'une extrémité aval du bord de fuite (12) de l'ailette (10) et environ 1.0 mm au début de la deuxième partie.

8. Diffuseur (5) selon l'une des revendications 1 à 7, dans lequel la virole interne (20) et la virole externe (30) présentent chacune :
- une face interne (22, 32) s'étendant en regard de l'ailette (10)
- une face externe (24, 34) opposée à la face interne (22, 32), et
- un bord amont (25, 35) et un bord aval (26, 36), l'amont et l'aval étant définis par le sens d'écoulement des gaz dans le diffuseur (5),
la face externe (24, 34) de la virole externe (30) et de la virole interne (20) présentant chacune une surépaisseur (28, 38) au niveau de chaque ailette (10), ladite surépaisseur (28, 38) s'étendant au moins entre le bord aval (26, 36) de la virole associée (20, 30) et une projection du bord de fuite (12) de l'ailette (10) sur ladite face externe (24, 34).

9. Diffuseur (5) selon la revendication 8, dans lequel, la surépaisseur (28, 38) la virole interne (20) et/ou de la virole externe (30) s'étend en outre de part et d'autre de la fente (21, 31) associée logeant l'ailette (10).

10. Diffuseur (5) selon la revendication 8, dans lequel la surépaisseur (28, 38) s'étend sur au plus un tiers d'une longueur de la fente (21, 31) associée de la virole interne (20) et/ou de la virole externe (30), ladite longueur correspondant sensiblement à la distance (*d₂*) entre le bord d'attaque (11) et le bord de fuite (12) de l'ailette (10) au niveau de la virole interne (20).

11. Diffuseur (5) selon l'une des revendications 9 ou 10, dans lequel la surépaisseur (28, 38) s'étend à une distance de l'ordre de 2 mm de la fente (21, 31) de la virole (20, 30) associée.

12. Diffuseur (5) selon l'une des revendications 8 à 11, dans lequel la surépaisseur (28, 38) présente une forme en V ou en Y.

## Patentansprüche

1. Diffusor (5) eines Radial- oder Mischverdichters, umfassend einen Innenring (20), einen Außenring (30) und eine Reihe von Flügeln (10), die sich in Bezug auf eine Drehachse des Diffusors (5) radial zwischen dem Innenring (20) und dem Außenring (30) erstrecken,
wobei jeder Flügel (10) eine Vorderkante (11), eine Hinterkante (12), entgegengesetzt zur Vorderkante (11), und eine Höhe (h) aufweist, die einer Mindestabmessung des Flügels (10) entlang einer radialen Richtung in Bezug auf die Achse des Diffusors (5) zwischen dem Innenring (20) und dem Außenring (30) im Bereich des Flügels (10) entspricht,
wobei der Diffusor **dadurch gekennzeichnet ist, dass**:
die Hinterkante (12) jedes Flügels (10) derart gekrümmt ist, dass ein Abstand (*d₁*) zwischen der Vorderkante (11) und der Hinterkante (12) des Flügels (10) im Wesentlichen auf halber Höhe *(h*/*2)* des Flügels (10) um 5 % bis 15 % kürzer ist, als ein Abstand (*d₂*) zwischen der Vorderkante (11) und der Hinterkante (12) des Flügels (10) im Bereich des Innenrings (20), und
die Hinterkante (12) einen evolutionären Querschnitt aufweist, der einen ersten Teil umfasst, der eine Leiste (14) in der Nähe des Außenrings (20) bildet und eine Höhe (*H*) gleich höchstens 10 % der Höhe (h) des Flügels (10) aufweist, einen zweiten gekrümmten Teil und einen dritten Teil, der eine Leiste (14) im Wesentlichen gleich dem ersten Teil bildet.

2. Diffusor (5) nach Anspruch 1, wobei der Abstand (*d₁*) zwischen der Vorderkante (11) und der Hinterkante (12) des Flügels (10) auf halber Höhe (*h*/*2*) des Flügels (10) um 10 % bis 15 % kürzer ist, als ein Abstand (*d₂*) zwischen der Vorderkante (11) und der Hinterkante (12) des Flügels (10) im Bereich des Innenrings (20).

3. Diffusor (5) nach einem der Ansprüche 1 oder 2, wobei die Hinterkante (12) einen Krümmungsradius (R1) aufweist, der in der Nähe des Innenrings (20) und des Außenrings (30) kleiner ist, als ein Krümmungsradius (R2) auf halber Höhe (*h*/*2*) des Flügels (10).

4. Diffusor (5) nach Anspruch 3, wobei der Krümmungsradius (R1) der Hinterkante (12) in der Nähe des Innenrings (20) und des Außenrings (30) mindestens halb so groß ist, wie der Krümmungsradius (R2) der Hinterkante (12) auf halber Höhe (*h*/*2*) des Flügels (10).

5. Diffusor (5) nach einem der Ansprüche 1 bis 4, wobei die Höhe (H) der Leiste (14) im ersten Teil im Wesentlichen konstant ist.

6. Diffusor (5) nach einem der Ansprüche 1 bis 4, wobei die Höhe (H) der Leiste (14) im ersten Teil evolutionär ist.

7. Diffusor (5) nach Anspruch 6, wobei die Höhe (H) der Leiste zwischen 0,6 mm im Bereich eines stromabwärtigen Endes der Hinterkante (12) des Flügels (10) und etwa 1,0 mm zu Beginn des zweiten Teils enthalten ist.

8. Diffusor (5) nach einem der Ansprüche 1 bis 7, wobei der Innenring (20) und der Außenring (30) jeweils Folgendes aufweisen:
- eine Innenseite (22, 32), die sich auf Höhe des Flügels (10) erstreckt
- eine Außenseite (24, 34) entgegengesetzt zur Innenseite (22, 32), und
- eine stromaufwärtige Kante (25, 35) und eine stromabwärtige Kante (26, 36), wobei stromaufwärts und stromabwärts durch die Strömungsrichtung der Gase in dem Diffusor (5) definiert werden,
wobei die Außenseite (24, 34) des Außenrings (30) und des Innenrings (20) jeweils ein Aufmaß (28, 38) im Bereich jedes Flügels (10) aufweist, wobei sich das Aufmaß (28, 38) mindestens zwischen der stromabwärtigen Kante (26, 36) des zugehörigen Rings (20, 30) und einer Projektion der Hinterkante (12) des Flügels (10) auf der Außenseite (24, 34) erstreckt.

9. Diffusor (5) nach Anspruch 8, wobei sich das Aufmaß (28, 38) des Innenrings (20) und/oder des Außenrings (30) weiter beiderseits des zugehörigen Spalts (21, 31), der den Flügel (10) aufnimmt, erstreckt.

10. Diffusor (5) nach Anspruch 8, wobei sich das Aufmaß (28, 38) über höchstens ein Drittel einer Länge des zugehörigen Spalts (21, 31) des Innenrings (20) und/oder des Außenrings (30) erstreckt, wobei die Länge im Wesentlichen dem Abstand (*d₂*) zwischen der Vorderkante (11) und der Hinterkante (12) des Flügels (10) im Bereich des Innenrings (20) entspricht.

11. Diffusor (5) nach einem der Ansprüche 9 oder 10, wobei sich das Aufmaß (28, 38) über eine Distanz in der Größenordnung von 2 mm des Spalts (21, 31) des zugehörigen Rings (20, 30) erstreckt.

12. Diffusor (5) nach einem der Ansprüche 8 bis 11, wobei das Aufmaß (28, 38) eine V- oder Y-Form aufweist.

## Claims

1. A diffuser (5) of a radial or mixed-flow compressor comprising an inner shroud (20), an outer shroud (30) and a series of fins (10) extending radially with respect to an axis of revolution of the diffuser (5) between the inner shroud (20) and the outer shroud (30),
each fin (10) having a leading edge (11), a trailing edge (12) opposite to the leading edge (11), and a height (h) corresponding to a minimum dimension of the fin (10), along a radial direction with respect to the axis of the diffuser (5), between the inner shroud (20) and the outer shroud (30) at the fin (10),
the diffuser (5) being **characterised in that**:
- the trailing edge (12) of each fin (10) is curved so that a distance (*d₁*) between the leading edge (11) and the trailing edge (12) of the fin (10) substantially at mid-height (*h*/2) of the fin (10) is 5% to 15% shorter than a distance (*d₂*) between the leading edge (11) and the trailing edge (12) of the fin (10) at the inner shroud (20), and
- the trailing edge (12) has a variable cross-section comprising a first portion forming a wall (14) in the vicinity of the outer shroud (20) and having a height (*H*) equal to at most 10% of the height (*h*) of the fin (10), a second curved portion and a third portion forming a wall (14) substantially identical to the first portion.

2. The diffuser (5) according to claim 1, wherein the distance (*d₁*) between the leading edge (11) and the trailing edge (12) of the fin (10) at mid-height (*h*/2) of the fin (10) is 10% to 15% shorter than the distance (*d₂*) between the leading edge (11) and the trailing edge (12) of the fin (10) at the inner shroud (20).

3. The diffuser (5) according to any of claims 1 or 2, wherein the trailing edge (12) has a radius of curvature (R1) that is smaller in the vicinity of the inner shroud (20) and of the outer shroud (30) than a radius of curvature (R2) at mid-height (*h*/2) of the fin (10) .

4. The diffuser (5) according to claim 3, wherein the radius of curvature (R1) of the trailing edge (12) in the vicinity of the inner shroud (20) and of the outer shroud (30) is at least twice smaller than the radius of curvature (R2) of the trailing edge (12) at mid-height (*h*/2) of the fin (10).

5. The diffuser (5) according to any of claims 1 to 4, wherein the height (H) of the wall (14) in the first portion is substantially constant.

6. The diffuser (5) according to any of claims 1 to 4, wherein the height (H) of the wall (14) in the first portion progressively changes.

7. The diffuser (5) according to claim 6, wherein the height (H) of the wall is comprised between 0.6 mm at a downstream end of the trailing edge (12) of the fin (10) and of about 1.0 mm at the beginning of the second portion.

8. The diffuser (5) according to any of claims 1 to 7, wherein the inner shroud (20) and the outer shroud (30) each have:
- an inner face (22, 32) extending facing the fin (10),
- an outer face (24, 34) opposite to the inner face (22, 32), and
- an upstream edge (25, 35) and a downstream edge (26, 36), wherein upstream and downstream are defined by the direction of flow of the gases in the diffuser (5), the outer face (24, 34) of the outer shroud (30) and of the inner shroud (20) each having an extra thickness (28, 38) at each fin (10), said extra thickness (28, 38) extending at least between the downstream edge (26, 36) of the associated shroud (20, 30) and a projection of the trailing edge (12) of the fin (10) on said outer face (24, 34).

9. The diffuser (5) according to claim 8, wherein, the extra thickness (28, 38) of the inner shroud (20) and/or of the outer shroud (30) further extends on either side of the associated slit (21, 31) housing the fin (10) .

10. The diffuser (5) according to claim 8, wherein the extra thickness (28, 38) extends over at most one third of a length of the associated slit (21, 31) of the inner shroud (20) and/or of the outer shroud (30), said length corresponding substantially to the distance (*d₂*) between the leading edge (11) and the trailing edge (12) of the fin (10) at the inner shroud (20).

11. The diffuser (5) according to any of claims 9 or 10, wherein the extra thickness (28, 38) extends at a distance in the order of 2 mm from the slit (21, 31) of the associated shroud (20, 30).

12. The diffuser (5) according to any of claims 8 to 11, wherein the extra thickness (28, 38) has a V or Y shape.
